Europäisches Patentamt

European Patent Office

Office européen des brevets

(19)

(11) **EP 0 818 692 B1**

(12) **FASCICULE DE BREVET EUROPEEN**

(45) Date de publication et mention
de la délivrance du brevet:
**09.01.2002 Bulletin 2002/02**

(51) Int Cl.[7]: **G01S 13/90**, G01S 13/60

(21) Numéro de dépôt: **97401684.2**

(22) Date de dépôt: **11.07.1997**

(54) **Procédé de détermination du module de la vitesse du porteur d'un radar**

Verfahren zum Bestimmen des Modulus der Geschwindigkeit eines Radarträgers

Method for determining the absolute value of the velocity of a radar carrier

(84) Etats contractants désignés:
**DE FR GB IT**

(30) Priorité: **12.07.1996 FR 9608733**

(43) Date de publication de la demande:
**14.01.1998 Bulletin 1998/03**

(73) Titulaire: **Thales**
**75008 Paris (FR)**

(72) Inventeurs:
• **Chamouard, Eric**
**94117 Arcueil Cedex (FR)**

• **Monod, Brice**
**94117 Arcueil Cedex (FR)**

(74) Mandataire: **Beylot, Jacques et al**
**Thomson-CSF Propriété Intellectuelle, 13,**
**Avenue du Président Salvador Allende**
**94117 Arcueil Cédex (FR)**

(56) Documents cités:
**EP-A- 0 406 877** **US-A- 4 771 287**

## Description

La présente invention concerne les radars aéroportés ou embarqués à bord de satellites.

Lorsqu'un radar aéroporté fonctionne en mode imagerie (SAR), la conformité de l'image à la réalité dépend de la précision avec laquelle est connu le module de la vitesse de déplacement du porteur du radar. Une imprécision dans la connaissance du module de la vitesse du radar se traduit par une déformation de l'image qui altère les mesures de distance faites dans cette image. Pour obtenir des mesures de distance précises sur une image radar, on est donc contraint de connaître le module de la vitesse de déplacement du porteur d'une manière extrêmement précise.

Dans la technique antérieure, il est habituel de déterminer la vitesse de déplacement du porteur, soit à l'aide du radar lui-même qui fonctionne alors dans un mode spécifique de mesure du vecteur vitesse du porteur, différent du mode imagerie et faisant intervenir le calage du radar par rapport à son porteur, soit à l'aide d'un équipement distinct du radar comme un système de navigation par satellites (GPS) ou, si sa précision le permet, la centrale inertielle.

On se propose ici, de déterminer le module de la vitesse de déplacement du porteur d'un radar à l'aide du seul radar lui même, sans faire intervenir le calage de celui-ci par rapport à son porteur, et indépendamment de la dérive du porteur due à un éventuel vent de travers, afin d'améliorer la précision de la mesure et d'éviter la nécessité du recours à un autre système que le radar lui-même.

La présente invention a pour objet un procédé de détermination du module de la vitesse de déplacement du porteur d'un radar consistant à :

- éclairer latéralement avec le radar une même zone du sol à deux instants différents $t_1$ et $t_2$,
- mesurer les distances $D_1$ et $D_2$, et les décalages de fréquence Doppler $F_{d1}$ et $F_{d2}$ des échos retournés par un même point de la zone du sol observée au cours des deux instants $t_1$ et $t_2$, et
- déduire le module $|\vec{V}_h|$ de la vitesse de déplacement du porteur de la relation :

$$|\vec{V}_h| = \sqrt{\frac{\lambda}{2(t_2 - t_1)} (D_1.F_{d1} - D_2.F_{d2})}$$

$\lambda$ étant la longueur d'onde de l'onde émise par le radar.

Ce procédé a l'avantage de ne pas faire intervenir le calage du radar par rapport à son porteur car il ne nécessite pas la connaissance précise de l'angle de pointage du radar par rapport au trièdre de référence du porteur, ni celle de l'angle de dérive du porteur par rapport à sa trajectoire. Il en résulte une augmentation de la précision de la mesure.

D'autres caractéristiques et avantages de l'invention ressortiront de la description ci-après d'un mode de mise en oeuvre donné à titre d'exemple. Cette description sera faite en regard du dessin dans lequel :

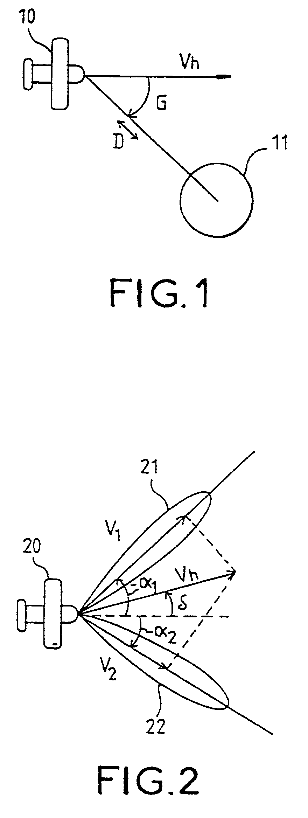

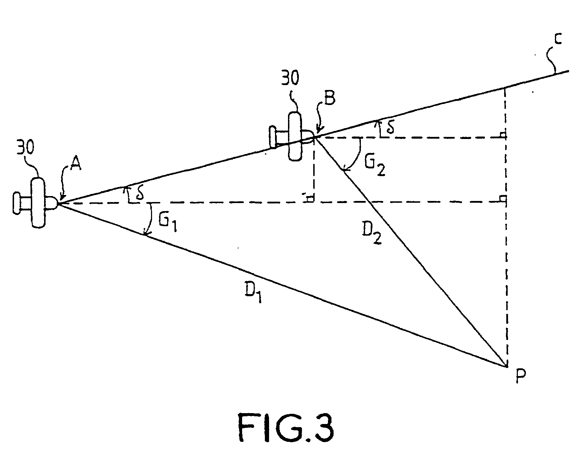

- une figure 1 est un schéma illustrant la façon d'éclairer latéralement une zone du sol par un radar aéroporté pour en prendre une imagé,
- une figure 2 est un schéma illustrant la manière habituelle d'estimer la vitesse sol au moyen d'un radar aéroporté, et
- une figure 3 est un schéma illustrant la manière, selon l'invention, d'estimer le module de la vitesse sol au moyen d'un radar aéroporté.

Un dispositif d'imagerie par effet Doppler utilise la dépendance de la fréquence Doppler en fonction du gisement ou écart angulaire de la zone visée par rapport à l'axe de déplacement du porteur pour former une image. La prise de vue est latérale car un radar en mode imagerie est aveugle dans l'axe de déplacement de son porteur. Comme on peut le voir sur la figure 1, le radar est supposé placé en pointe avant d'un aéronef 10 qui se déplace au-dessus du sol avec une vitesse horizontale $V_h$. Il vise latéralement par rapport à l'aéronef 10, une zone à cartographier 11 située à une distance D, à un gisement G et à un site -S. L'écho renvoyé par le centre de cette zone 11 est affecté d'un retard $\tau$ proportionnel à sa distance D et d'un décalage en fréquence $F_d$ due à l'effet Doppler vérifiant les relations :

$$\begin{cases} D = \dfrac{c\tau}{2} \\[2mm] F_d = \dfrac{2V_h.\cos(G).\cos(-S)}{\lambda} \end{cases} \qquad (1)$$

avec:

- c, la vitesse de propagation des ondes hyperfréquence du radar,
- λ, la longueur d'onde des ondes hyperfréquence du radar.

Soit $\Delta V_h$ l'erreur commise sur l'estimation $\overset{\wedge}{V}_h$ de la vitesse horizontale du porteur :

$$\overset{\wedge}{V}_h = V_h + \Delta V_h$$

Si l'on considère deux points $P_a$ et $P_b$ d'une image à la même distance D, au même site -S et à deux gisements distincts $G_a$ et $G_b$, on peut écrire que le gisement apparent $G_a$ est lié au gisement réel $G_a$ par la relation :

$$\cos(\overset{\wedge}{G}_a) = \frac{V_h}{V_h + \Delta V_h} \cos(G_a)$$

car :

$$\cos\left(\hat{G}_a\right) = \frac{\lambda F_{da}}{2\hat{V}_h \cos\left(-\hat{S}\right)} = \frac{\lambda F_{da}}{2 V_h \cos\left(-\hat{S}\right).\left(1 + \dfrac{\Delta V_h}{V_h}\right)}$$

et de la même façon, le gisement apparent $\overset{\wedge}{G}_b$ est lié au gisement réel $G_b$ par une relation de la forme

$$\cos(\overset{\wedge}{G}_b) = \frac{V_h}{V_h + \Delta V_h} \cos(G_b)$$

L'erreur sur la vitesse horizontale du porteur étant faible, on peut écrire :

$$\begin{cases} \cos\left(\hat{G}_a\right) \approx \left(1 - \dfrac{\Delta V_h}{V_h}\right)\cos\left(G_a\right) \\[4mm] \cos\left(\hat{G}_b\right) \approx \left(1 - \dfrac{\Delta V_h}{V_h}\right)\cos\left(G_b\right) \end{cases}$$

Si l'on s'intéresse à la distance r entre les deux points de l'image, celle-ci s'écrit :

$$r = 2D\sin\frac{G_a - G_b}{2} = D\sqrt{2 - 2.\cos(G_a - G_b)}$$

tandis que la distance apparente $\overset{\wedge}{r}$ qui est la seule accessible par la mesure s'exprime par:

$$\hat{r} = D\sqrt{2 - 2.\cos\left(\hat{G}_a - \hat{G}_b\right)} \qquad\qquad (2)$$

L'erreur Δr commise sur la distance entre les deux points de l'image:

$$\Delta r = \hat{r} - r$$

est, au premier ordre, en supposant que les gisement $G_1$ et $G_2$ sont proches et les erreurs petites :

$$\Delta r \approx D \frac{\Delta \dot{V}_h}{V_h} \left( \frac{1}{\tan(G_a)} - \frac{1}{\tan(G_b)} \right)$$

En effet, les angles $G_a - G_b$ et $\hat{G}_a - \hat{G}_b$ étant petits, leurs cosinus peuvent être remplacés par leurs développements limités, de sorte que l'on a :

$$\begin{cases} \cos(\hat{G}_a - \hat{G}_b) \cong 1 - \dfrac{(\hat{G}_a - \hat{G}_b)^2}{2} \\[2ex] \cos(G_a - G_b) \cong 1 - \dfrac{(G_a - G_b)^2}{2} \end{cases}$$

Il vient alors :

$$\begin{cases} \hat{r} \cong D(\hat{G}_a - \hat{G}_b) \\[1ex] r \cong D(G_a - G_b) \\[1ex] \Delta r \cong D(\hat{G}_a - G_a - (\hat{G}_b - G_b)) \end{cases}$$

Or:

$$\hat{G}_a = \arccos\left( \left( 1 - \frac{\Delta V_h}{V_h} \right) \cos(G_a) \right) = \arccos\left( \cos(G_a) - \frac{\Delta V_h}{V_h} \cos(G_a) \right)$$

En développant l'arccosinus au premier ordre, on obtient :

$$\hat{G}_a \cong G_a + \frac{\Delta V_h}{V_h.\tan(G_a)}$$

Par le même raisonnement, on obtient :

$$\hat{G}_b \cong G_b + \frac{\Delta V_h}{V_h.\tan(G_b)}$$

D'où:

$$\Delta r \approx D \frac{\Delta V_h}{V_h}\left(\frac{1}{\tan(G_a)} - \frac{1}{\tan(G_b)}\right) \qquad (3)$$

Par exemple, si l'on commet une erreur de 1 % sur la vitesse horizontale de déplacement du porteur, celle-ci se traduit sur une mesure de distance entre deux points éloignés transversalement de 10 km et distants du radar de 100 km à un gisement moyen de 45°, par une erreur de l'ordre de 200 m.

Pour diminuer cette erreur de mesure sur la distance entre deux points d'une image radar, il faut améliorer la précision sur la vitesse du porteur. Dans le scénario ci-dessus, pour que l'erreur de distance soit inférieure à 10 m, on doit connaître la vitesse du porteur à moins de 0,05 % près, ce qui est très difficile.

Dans la technique antérieure, la vitesse du porteur s'obtient soit à l'aide d'un système de navigation par satellite (GPS), soit à l'aide du radar fonctionnant dans un mode spécial dit de détermination du vecteur vitesse sol.

La figure 2 illustre le principe de fonctionnement d'un radar aéroporté fonctionnant en mode de détermination du vecteur vitesse de son porteur. Le radar placé en pointe avant d'un aéronef 20 effectue deux visées latérales du sol à gisements importants $-\alpha_1$ et $\alpha_2$ et à très faible site $\beta$. Au cours de la première visée, qui a lieu, par exemple du côté gauche de l'aéronef, au gisement $-\alpha_1$, le faisceau 21 du radar illumine une portion du sol qui retourne un écho affecté d'une dérive en fréquence $F_{D\alpha1}$ liée à l'effet Doppler dû à la composante $V_1$ de la vitesse horizontale du porteur dans la direction visée par la relation :

$$V_{1\,radar} = \frac{\lambda F_{D\alpha1}}{2\cos\beta}$$

Au cours de la deuxième visée qui a lieu de l'autre coté de l'aéronef, le côté droit dans l'exemple cité, au gisement $\alpha_2$, le faisceau 22 du radar illumine une autre portion de sol qui retourne un écho affecté d'une dérive en fréquence $F_{d\alpha2}$ liée à l'effet Doppler dû à la composante $V_2$ de la vitesse horizontale du porteur dans la direction visée par la relation :

$$V_{2\,radar} = \frac{\lambda F_{D\alpha2}}{2\cos\beta}$$

Une construction géométrique, simplifiée dans le cas où les gisements $-\alpha_1$ et $\alpha_2$ sont pris égaux à $-\pi/4$ et $+\pi/4$, permet de déterminer le module et l'orientation du vecteur vitesse sol à partir de ses projections $V_1$ et $V_2$ dans les gisements $-\alpha_1$ et $\alpha_2$. L'orientation du vecteur vitesse sol n'est pas obligatoirement confondue avec l'axe longitudinal de l'aéronef 21 car il peut y avoir, comme c'est le cas représenté à la figure 2, un angle de dérive de cap $-\delta$ due au vent de travers. En plus du module, cette méthode de détermination donne la direction de la vitesse sol de l'aéronef, cela indépendamment de la dérive. Cependant, elle met en oeuvre une connaissance a priori des gisements $-\alpha_1$ et $\alpha_2$ des directions visées et éventuellement du site $\beta$, si celui-ci n'est pas négligeable, qui fait entrer en ligne de compte les erreurs de calage du radar par rapport au référentiel de l'aéronef ce qui nuit à la précision de la mesure.

Il est intéressant de profiter du fait que, dans une mesure de distance entre deux points d'une image radar, il est inutile de connaître la direction de la vitesse sol du porteur et d'utiliser ce fait pour rechercher un mode de fonctionnement du radar en détermination du seul module de la vitesse sol ne faisant pas entrer en ligne de compte les erreurs de calage du radar par rapport au référentiel de l'aéronef, cela afin d'améliorer la précision de la mesure et de rendre inutile le recours à un système de navigation par satellites.

Pour ce faire, on propose d'éclairer latéralement avec le radar, un même point du sol en deux instants successifs $t_1$ et $t_2$ décalés d'un intervalle de temps T et d'effectuer, à chacun de ces instants, les mesures des distances $D_1$ et $D_2$, et des décalages de fréquence Doppler $F_{d1}$ et $F_{d2}$ des échos correspondants.

Pour la suite, on supposera, dans un but de simplification, que l'angle de site $-S$ sous lequel est vu le point illuminé du sol est très faible, au plus quelques degrés, et peut avoir son cosinus approché sans inconvénient par la valeur 1.

La figure 3 illustre ce processus d'éclairement, par un radar porté par un aéronef 30, d'un même point P du sol, en deux instants successifs $t_1$ et $t_2$. L'aéronef 30 suit une trajectoire rectiligne c. A l'instant $t_1$, lorsque son radar éclaire le point P du sol pour la première fois, il est au point A de sa trajectoire c avec un angle de dérive $\delta$ ; il voit le point P du sol à une distance $D_1$ et sous un gisement $G_1$. A l'instant $t_2$, lorsque son radar éclaire le point P du sol pour la deuxième fois, il est parvenu au point B de sa trajectoire c avec le même angle de dérive $\delta$ et voit le point P du sol à une nouvelle distance $D_2$ et sous un nouveau gisement $G_2$.

Le décalage Doppler $F_{d2}$ de l'écho consécutif à l'éclairement du point P du sol au deuxième instant $t_2$ répond à la relation :

$$F_{d2} = \frac{2V_h}{\lambda}\cos(G_2 - \delta)$$

$\lambda$ étant la longueur d'onde de l'onde hyperfréquence émise par le radar. En développant le cosinus, il vient :

$$F_{d2} = \frac{2V_h}{\lambda}[\cos(G_2)\cos(\delta) + \sin(G_2)\sin(\delta)] \tag{4}$$

En remarquant que, d'après la géométrie de la figure 3, l'on peut écrire :

$$\begin{cases} D_2\cos(G_2) = D_1\cos(G_1) - V_h.T.\cos(\delta) \\ D_2\sin(G_2) = D_1\sin(G_1) - V_h.T.\sin(\delta) \end{cases} \tag{5}$$

$V_h$ étant la vitesse sol de l'aéronef et T l'intervalle de temps séparant les instants $t_1$ et $t_2$. Il vient alors en remplaçant dans la relation (4) le cosinus $G_2$ et le sinus $G_2$ par leurs valeurs prises dans les relations (5) :

$$F_{d2} = \frac{2V_h}{\lambda} \times \frac{D_1}{D_2}\left[\cos(G_1 - \delta) - \frac{V_h.T}{D_1}\right]$$

En tenant compte du fait que :

$$F_{d1} = \frac{2V_h}{\lambda}\cos(G_1 - \delta)$$

Il vient :

$$F_{d2} = \frac{D_1}{D_2}\left[F_{d1} - \frac{2V_h^2.T}{\lambda.D_1}\right]$$

On en déduit :

$$V_h = \sqrt{\frac{\lambda}{2T}(D_1.F_{d1} - D_2.F_{d2})} \tag{6}$$

Cette expression de la vitesse sol du porteur du radar présente l'intérêt de ne plus faire intervenir de gisement et donc de rendre la mesure indépendante du calage du radar sur son porteur et de la dérive de cap du porteur.

L'expression précédente ne donne pas exactement la vitesse sol du porteur du radar mais sa composante selon le site de la visée. Cela ne présente pas d'inconvénient pour la détermination de la distance entre deux points d'une image radar, dans la mesure où c'est cette composante qui intervient dans les calculs.

L'écart-type des erreurs de mesure du module de la vitesse sol du porteur du radar par mise en oeuvre de la relation (6) est donné par la formule suivante :

$$\sigma V_h = \frac{\lambda}{4 V_h.T} \sqrt{\sigma D^2 . \left( F_{d1}^2 + F_{d2}^2 \right) + \sigma F_d^2 . \left( D_1^2 + D_2^2 \right)}$$

avec :

$\sigma F_d$, l'écart-type de la mesure de fréquence de décalage Doppler,
$\sigma D$, l'écart-type de la mesure de distance.

Or, pour un radar d'imagerie, la précision de mesure de fréquence de décalage Doppler est généralement choisie telle que la résolution de l'image soit isotrope, soit une résolution radiale (selon l'axe distance) égale à la résolution transverse (axe des fréquences Doppler). L'écart-type de la mesure de fréquence de décalage Doppler vaut alors

$$\sigma F_d = \frac{2 V_h.\sin(G_1)}{\lambda} \cdot \frac{\sigma D}{D_1}$$

Si de plus l'intervalle de temps T entre les deux instants de mesure $t_1$ et $t_2$ est assez court pour que les distances et les fréquences de décalage Doppler aient peu varié, l'expression de la précision de la mesure de vitesse se simplifie :

$$\sigma V_h = \frac{\sigma D}{\sqrt{2}.T}$$

Cette précision sur la vitesse permet d'obtenir une précision de mesure de distance sur une image, dont l'écart-type $\sigma r$ déduit de la relation (3) en négligeant la dérive vaut :

$$\sigma r \approx D_1 \frac{\sigma D}{\sqrt{2}.V_h.T} \left( \frac{1}{\tan(G_a)} - \frac{1}{\tan(G_b)} \right)$$

En considérant une précision de mesure de distance radar-cible de 1 m, une vitesse du porteur du radar de 200 m/s et en supposant que les deux images d'une même zone du sol soient réalisées à 10 d'intervalle, la précision sur la mesure de distance entre deux points de l'image passe de 200 m à 7 m.
On peut réduire la durée de l'intervalle de temps séparant les deux prises de vue d'une même zone tout en conservant la même précision de mesure, en utilisant plusieurs points de réflexion dans l'image pour estimer la vitesse sol du porteur. On fait alors autant d'évaluations de la vitesse sol du porteur qu'il y a de points de réflexion pris en compte et l'on fait la moyenne de ces évaluations ce qui améliore la précision. Dans l'exemple ci-dessus, l'utilisation de 100 points de réflexion au lieu d'un permet de ramener l'intervalle de temps de 10s à 1s, pour la même précision.
On peut remarquer que l'acquisition des signaux nécessaires à la formation de l'image Radar, par une technique SAR par exemple, et celle des mesures nécessaires à l'estimation du module de la vitesse peuvent être effectuées dans le même temps. Ceci permet d'effectuer les meilleures corrections possibles sur les distances entre points dans l'image radar.
Le procédé d'évaluation du module de la vitesse sol du porteur d'un radar qui vient d'être décrit pour un radar 2D, se généralise aux radars 3D, soit en utilisant les informations des voies différences dans les cas des modes 3D interférométriques, soit en utilisant un fichier numérique décrivant l'altitude du terrain dans les cas des modes 3D avec fichier numérique de terrain.

**Revendications**

1. Procédé de détermination du module de la vitesse de déplacement du porteur d'un radar **caractérisé en ce qu'**il consiste à :

   - éclairer latéralement avec le radar une même zone du sol à deux instants différents $t_1$ et $t_2$,
   - mesurer les distances $D_1$ et $D_2$, et les décalages de fréquence Doppler $F_{d1}$ et $F_{d2}$ des échos retournés par un même point de la zone du sol observée au cours des deux instants $t_1$ et $t_2$, et
   - déduire le module $\left|\vec{V_h}\right|$ de la vitesse de déplacement du porteur de la relation :

$$\left|\vec{V_h}\right| = \sqrt{\frac{\lambda}{2(t_2 - t_1)}\,(D_1.F_{d1} - D_2.F_{d2})}$$

   $\lambda$ étant la longueur d'onde de l'onde émise par le radar.

2. Procédé selon la revendication 1, **caractérisé en ce qu'**il consiste à effectuer plusieurs déterminations du module de la vitesse de déplacement du porteur à l'aide des échos radar retournés par plusieurs points du sol observés au cours de deux instants successifs, et à faire la moyenne de ces déterminations pour améliorer la précision.

3. Procédé utilisant les signaux radar reçus lors de la prise de vue pour l'obtention simultanée d'une image radar en utilisant les fréquences Doppler, par exemple par une technique SAR, et de la mesure du module du vecteur vitesse selon la revendication 1 ou 2 pour fournir une image radar dans laquelle les erreurs de distance entre les points de cette image sont corrigés avec précision.

**Patentansprüche**

1. Verfahren zum Bestimmen des Betrags der Bewegungsgeschwindigkeit des Trägers eines Radars, **dadurch gekennzeichnet, daß** es darin besteht:

   - dieselbe Zone des Bodens zu zwei verschiedenen Zeitpunkten $t_1$ und $t_2$ mit dem Radar seitlich zu bestrahlen,

   - die Abstände $D_1$ und $D_2$ und die Doppler-Frequenzverschiebungen $F_{d1}$ und $F_{d2}$ der vom selben Punkt der beobachteten Bodenzone zurückgeleiteten Echos zu den beiden Zeitpunkten $t_1$ und $t_2$ zu messen und

   - den Betrag $\left|\vec{V_h}\right|$ der Bewegungsgeschwindigkeit des Trägers aus der Beziehung:

$$\left|\vec{V_h}\right| = \sqrt{\frac{\lambda}{2(t_2 - t_1)}\,(D_1 \cdot F_{d1} - D_2 \cdot F_{d2})}$$

   abzuleiten, wobei $\lambda$ die Wellenlänge der vom Radar ausgesendeten Welle ist.

2. Verfahren nach Anspruch 1, **dadurch gekennzeichnet, daß** es darin besteht, mehrere Bestimmungen des Betrages der Bewegungsgeschwindigkeit des Trägers mit Hilfe der Radarechos, die von mehreren beobachteten Punkten des Bodens zu zwei aufeinanderfolgenden Zeitpunkten zurückgeleitet werden, auszuführen und den Mittelwert dieser Bestimmungen zu bilden, um die Genauigkeit zu verbessern.

3. Verfahren, das die bei der Aufnahme empfangenen Radarsignale verwendet, um gleichzeitig ein Radarbild unter Verwendung der Doppler-Frequenzen, beispielsweise durch eine SAR-Technik, und die Messung des Betrags des Geschwindigkeitsvektors nach Anspruch 1 oder 2 zu erhalten, um ein Radarbild zu liefern, in dem die Abstandsfehler zwischen den Punkten dieses Bildes präzise korrigiert sind.

**Claims**

1. Method for determining the modulus of the speed of movement of the carrier of a radar **characterized in that** it consists in:

-   illuminating laterally with the radar one and the same zone on the ground at two different instants $t_1$ and $t_2$,
-   measuring the distances $D_1$ and $D_2$, and the Doppler frequency shifts $F_{d1}$ and $F_{d2}$ of the echoes returned by one and the same point of the ground zone observed during the two instants $t_1$ and $t_2$, and
-   deducing the modulus $\left|\vec{V_h}\right|$ of the speed of movement of the carrier from the relation:

$$\left|\vec{V_h}\right| = \sqrt{\frac{\lambda}{2(t_2 - t_1)} (D_1.F_{d1} - D_2.F_{d2})}$$

$\lambda$ being the wavelength of the wave emitted by the radar.

2.  Method according to Claim 1, **characterized in that** it consists in performing several determinations of the modulus of the speed of movement of the carrier with the aid of the radar echoes returned by several ground points observed during two successive instants, and in averaging these determinations to improve the accuracy.

3.  Method using the radar signals received during the taking of the snapshot for the simultaneous obtaining of a radar image using the Doppler frequencies, for example by an SAR technique, and of the measurement of the modulus of the speed vector according to Claim 1 or 2 to provide a radar image in which the errors of distance between the points of this image are corrected accurately.

# FIG.1

# FIG.2

FIG.3